Europäisches Patentamt

**European Patent Office**

Office européen des brevets

(19)

(11) Publication number: **0 083 321**
**A2**

(12) # EUROPEAN PATENT APPLICATION

(21) Application number: **82830297.6**

(22) Date of filing: **10.12.82**

(51) Int. Cl.³: **B 29 D 27/00**

(30) Priority: **15.12.81 IT 2561181**

(43) Date of publication of application:
**06.07.83 Bulletin 83/27**

(84) Designated Contracting States:
**AT BE CH DE FR GB LI NL SE**

(71) Applicant: **ASBITON ITALIANA s.r.l.**
**Strada Nuova per Meda**
**I-22060 Novedrate (Como)(IT)**

(72) Inventor: **Mora, Ferruccio**
**Via Alberto da Giussano**
**Mariano Comense (Como)(IT)**

(74) Representative: **Calvani, Domenico**
**UFFICIO BREVETTI ING. CALVANI, SALVI & VERONELLI**
**4, Piazza Duca d'Aosta**
**I-20124 Milan(IT)**

(54) **Method and equipment of impregnating a foamed resin with thermoplastic materials.**

(57) This invention relates to the impregnation of cellular materials, particularly foamed resins, with thermoplastic materials, such as bituminous materials, for providing elements acting as sound, heat or hydraulic insulating means, according to their compression degree as installed. To carry-out the foamed resin impregnations without any degradation thereof notwithstanding the use of thermoplastic materials having a higher melting point than that of the resin degradation, the thermoplastic material is applied in the form of a layer on a surface of a foamed resin sheet and then the foamed resin is impregnated with the thermoplastic material by compression, particularly obtained by calandering, and subsequent expansion of the compound.

FIG 3

ASBITON ITALIANA S.r.l. - Novedrate (Como)

"METHOD AND EQUIPMENT OF IMPREGNATING A FOAMED RESIN
WITH THERMOPLASTIC MATERIALS"

This invention relates to a method and equipment for carrying out the impregnation of an elastically compressible foamed resin with thermoplastic materials, such as bituminous materials, to form sealing elements having different sealing characteristics, according to the compression degree thereof, as installed. The so obtained material is usable in many technical fields, by being preferably comprised of foamed polyurethane derived from polyester resins having a density ranging from 25 to 35 g/l. and evenly impregnated with a thermoplastic material, such as bitumen or a butyl resin having a penetration value in the order of 80/100, in an amount ranging from 100 to 150 g/l. in such a manner that the impregnated material will have a specific gravity ranging from 125 to 185 g/l. This material is capable of operating at a temperatures from -10°C to 110°C and exhibits high water-repellence characteristics.

In order to obtain this material known per se, two methods are substantially followed now, the former of which comprises the steps of impregnating the foamed resin with bitumen or a thermoplastic material by forming an emulsion of bitumen (or thermoplastic material) with water, dipping and sqeezing the foamed resin into the emulsion and then heat-treating it in order to break the emulsion and release the water. This method presents some drawbacks since a product is obtained, whose water-repellence characteristic are not always as high as possible, because it retains a certain water affinity. Furthermore this method is particularly complex because of the necessary emulsion preparation step and the subsequents heat-treatment for removing the water therefrom.

The latter known method comprises the steps of impregnating the thermoplastic material into the resin by injection under pressure of the former into the latter through a suitable apparatus. This method, in addition to the necessity of requiring expensive apparatus, is quite difficult to carry out since the thermoplastic material is injected at a temperature (generally over 170°C) which is higher than the degradation temperature of the foamed resin (about 140°C). Therefore, it is necessary that the thermoplastic material temperature should very quickly decrease, before the resin characteristics can be affected, but after it is evenly distributed in the foamed resin. As a result, this second method is applicable only to resins comprised of foamed polyurethanes of a non conventional type, the cellular structure of which has been made fully open by evolvement of a gas or by a bad of diluted sodium hydroxide. These foams are very expensive and therefore together with the necessary apparatus make the cost of the obtained product higher.

Therefore, it is an object of the present invention

- 2 -

to provide a method and equipment of impregnation under the above mentioned conditions and for obtaining a material of the above-defined type, which will permit this operation to be carried out with the highest homogeneity, without resorting to the water emulsion step and therefore a product to be obtained which will retain the best water-repellence characteristics, while employing resins of conventional type and, obviously, without damages thereto.

The invention relates to a method and equipment for impregnating an elastically compressible foamed resin with thermoplastic materials, such as bituminous materials having a substantially higher melting point than the degradation temperature of the resins, the foamed resin being in the form of a sheet of controlled thickness, the method comprising the steps of applying a layer of a thermoplastic material on a surface of the foamed resin sheet, pressing the resin sheet and the thermoplastic material layer together and allowing the resin to elastically expand.

By means of the method according to the invention the advantage is obtained, that the thermoplastic material is merely applied in the form of a layer on the surface of the foamed resin, particularly a polyurethane foam, and is not injected within the foam. This means that the thermoplastic material layer will have a higher viscosity and hence a lower temperature than in the case of the direct injection thereof. Therefore, since the thermal gradient between the thermoplastic material temperature and the maximal permissible temperature of the resin is smaller, the mutual contact can be extended with respect to the times necessary in the conventional injection method, or better, on the same temperature holding time of the thermoplastic material in the contact condition with the resin, there is a lesser danger that the latter will degradate. Furthermore, the compression of the resin and thermoplastic material layer assembly can be carried out soon after the layer application has been performed and immediately thereafter the elastic expansion of the resin can be allowed, so that the thermoplastic material entered in the resin during the compression step will remain homogeneously distributed therein. At the same time a quick cooling is performed, thereby avoiding internal migrations. This leads to an extremely homogeneous product even if the used foamed resin is of a conventional type, with a cellular structure having mainly open pores, obtained by reaction of nolvols with polyisocyanates..

This invention will be described now in greater details in connection to an enbodiment thereof, shown by way of example in the accompanying drawings, wherein :

Fig. 1 diagrammatically shows the steps of the impregnating method according to the present invention, in a simplest embodiment thereof;

Fig. 2 diagrammatically shows the impregnating method in an embodiment with two subsequent steps;

Fig. 3 is a diagram of an equipment suitable for carrying out the method of Fig. 2;

Fig. 4 is a diagrammatic illustration of the impregnating method according to another embodiment thereof;

Fig. 5 is a diagram of an equipment suitable for carrying out the method of Fig. 4.

- 4 -

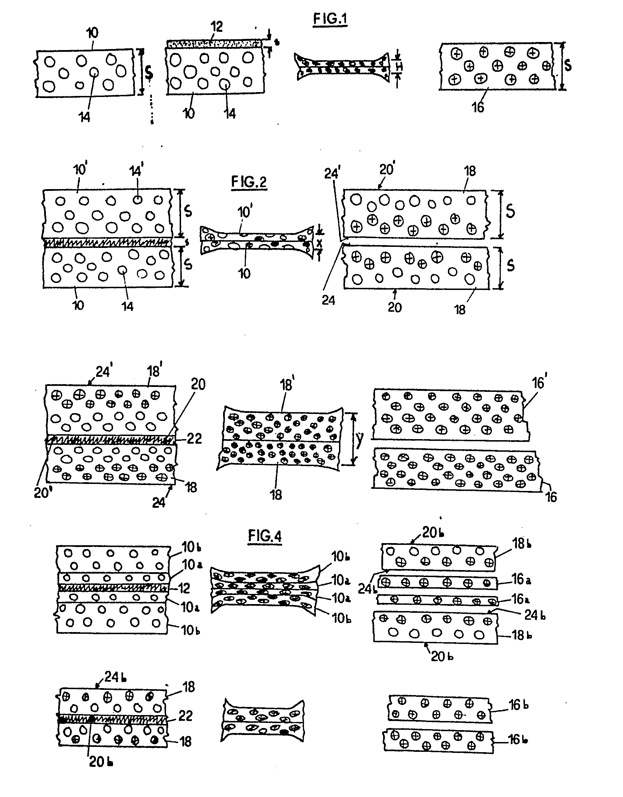

Referring first to Fig.1, the foamed resin 10 to be impregnated is preferably comprised of a conventional polyurethane foam having a cellular structure mainly with open and intercommunicating cells, and a specific gravity ranging from 10 to 100 g/l.. This foamed resin is in the form of a sheet having a thickness S which may be different according to the circumstances, but always controlled.

Applied above the sheet 10 in accordance with the invention, is a layer 12 of thermoplastic material, such as bitumen which can have a penetration value ranging from 40/60 to 180/200. The layer 12 must exhibit a certain viscosity, generally from 400 to 700 Cps and will have a thickness s which is depending on the impregnation degree required for the final product, obviously taking into account the thickness of the sheet 10 and the weight of the used thermoplastic material. Immediately after the application of the layer 12 of thermoplastic material or bitumen, all the assembly is subjected to a pressing action, e.g. by calendering, as will be seen better hereinafter, until a thickness H is reached, which is correlated with the thicknesses S and s and such as to assure the desired penetration of the bitumen layer 12 into the open cells 14 of the resin sheet 10. This impregnation has been diagrammatically shown in the drawings by plus signs drawn within the cells 14 of the resin 10.

Once the above mentioned compression has been performed the resin sheet 10, now impregnated with bitumen, is immediately allowed to expand again to its original thickness S, in

- 5 -

order to obtain the desired final product, indicated at 16 in Fig.1, in which the thermoplastic material is homogeneously distributed in the cellular structure of the resin. It should be noted that the resin sheet expansion causes a simultaneous and quick cooling effect on the bitumen within the cells 14, so that the cont-act time between resin and bitumen will be minimized, when the latter is at such a temperature as to be able of damaging the resin. It has been proved that all the operation can be carried out in a so very short time, that the holding time of the molten bitumen on the resin, starting from the application of the layer 12 to the cooling down to a lower temperature than that        dangerous for the resin, can be lesser that 3 seconds. This will permit the impregnation to be carried out with the best accuracy without the need of employing special resins.

Since the compression operation of the resin sheet 10 and the thermoplastic material layer 12 is preferably performed by calendering, it can be suitable to carry out the impregnating operation in two steps and simultaneously on two resin sheets 10,10' in order to avoid the calender rollers to be dirty with bitumen, as indicated in Fig.2. In this case a first calendering operation is performed, in which the bitumen layer 12 is distributed within the cellular structure of the resin sheets 10,10' to a lower depth than the thickness S of the sheets, generally in the order of one half or more this thickness. Thus a partially impregnated intermediate product 18,18', is obtained, which is comprised of two resin sheets which are then rotated by 180° and subjected again to an application of a bitumen

- 6 -

layer 22, a calendering and a reexpansion operation, starting from the surfaces 20,20' which were not involved in the application of the layer 12. During this second application of the bitumen layer 22, there is no risk of making the calender rollers dirty, because the bitumen applied on the surfaces 24,24' of the partially impregnated sheets 18,18' is already cooled and therefore will be not transferred to said rollers.

In an embodiment of the invention according to the method of Fig.2, two resin sheets 10,10', each having a thickness of 10 mm, are provided with a bitumen layer 12 having a thickness of 1-1,2 mm.. Under these conditions the first calendering operation was carried out with a roller nip X (fig.2) of 2 mm so as to obtain sheets 18,18' impregnated to about a thickness of 5 mm. The second calendering operation was carried out with a roller nip Y (fig.2) of the order of 12 mm, thereby completing the sheet impregnation.

It should be understood that the method can be carried out at higher speeds that those of the conventional method of injecting the thermoplastic material, e.g. speeds in the order of 5 m/min. as compared with the speed of 1,5 m/min. of the method employing injection nozzles.

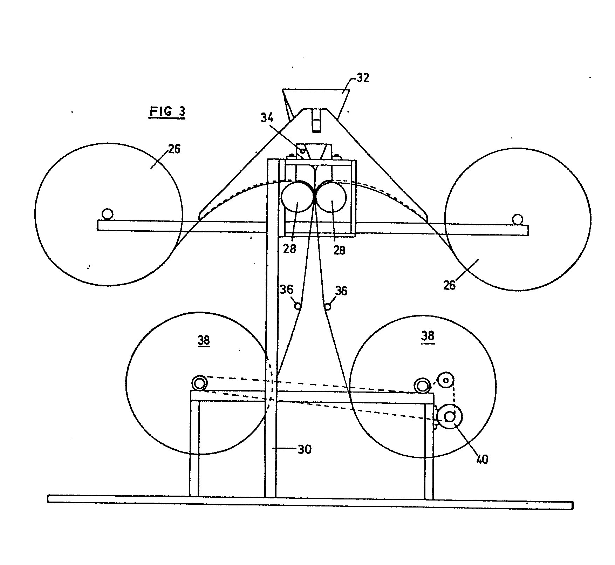

In Fig.3 there is shown in a diagrammatic manner a system for carrying out one of the impregnation steps illustrated in Fig.2. This system included a pair of take-off rolls 26 formed of the foamed resin sheets 10,10' to be impregnated or the partially impregnated sheets 18,18'. These sheets are conveyed, through conventional guide means, to the rollers 28 of a calender, supported by a frame 30, the roller nip being adjustable in a manner known per se. Provided above the calander rollers is a hopper 32, which contains the thermoplastic material heated to a suitable temperature, whereas a control element 34 will permit the hopper opening to be controlled to form the desired layer 12 or 22 of thermoplastic material or bitumen.

Downstream from the calender rollers 28, the resin will expand again and is conveyed, for example by means of guide rollers 32 to two take-up rolls 38 on which two rolls of partially impregnated foamed resin or finished product are wound, the take-up rolls 38 being driven by a conventional driving means 40 and being supported at any time on the frame 30. In order to improve the impregnation it is possible to provide rollers having a toothed surface (not shown) acting on the resin upstream the calander rollers 28, thereby causing localized compression and expansion actions.

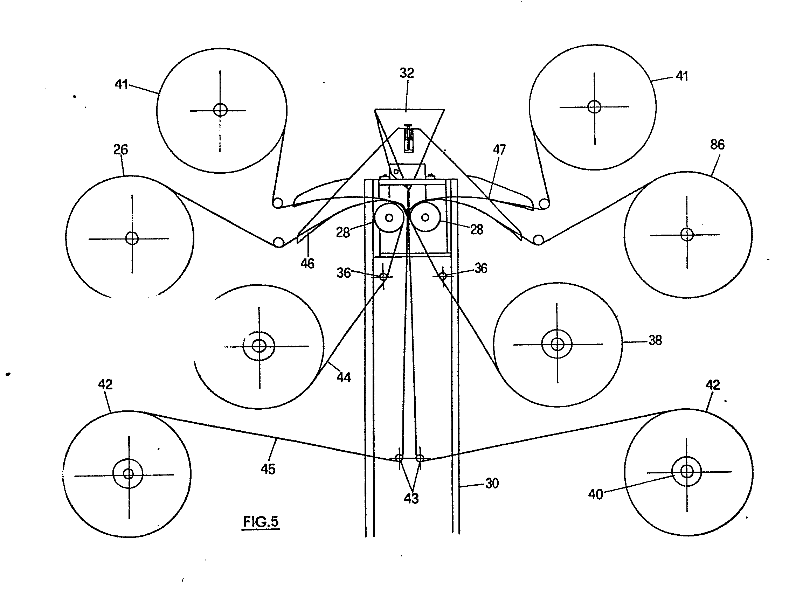

Where the thicknesses of the foamed resin to be impregnated are small and there is nevertheless the need of avoiding a contact between the bitumen in a pasty condition and the calender rollers it is possible to use the method diagrammatically illustrated in fig. 4. In a first step the impregnation with a bitumen layer 12 of two inner sheets 10a and two outer sheets 10b is performed, the impregnation of the former pair of sheets 10a being complete whereas that of the latter pair of sheets 10b being partial, as indicated in the first step of the method of fig. 2. Thus, two fully impregnated sheets 16a and two partially impregnated sheets 18b are obtained. The latter are then upturned and subjected to a separate impregnation

- 8 -

with a bitumen layer 22 of the non impregnated portion, as illustrated in the lower part of Fig. 4, or they are completely impregnated as outer sheets in a "pack" of four sheets, of which the inner ones will again lead to fully impregnated sheets 16a, and the outer ones will also lead to fully impregnated sheets 16b.

The equipment for carrying out the first step of the method is illustrated in Fig. 5, wherein the same references have been used for indicating similar components of the equipment of Fig. 3. This equipment includes, in addition to the means for forming the partially impregnated sheets 44, a further pair of take-off rolls 41 from which the inner sheets 47 are unwound, which are intended to be fully impregnated in order to give the finished product 45 which, by passing over the idler rollers 43 is wound on the take-up rolls 42 driven by motors 40.

Of course, the system can be modified and, if necessary, arranged so as to operate horizontally instead of vertically, in accordance with the production requirements. These changes as well as other possible modifications of the described method will not depart from the scope of the invention.

## C L A I M S

1. A method of impregnating an elastically compressible foamed resin with thermoplastic materials, such as bituminous materials having a substantially higher melting point than the resin degradation temperature, said foamed resin being in the form of a controlled thickness sheet, comprising the steps of applying a layer of thermoplastic material on a surface of the foamed resin sheet; pressing the resin sheet and the thermoplastic layer together and allowing the resin to be again elastically expanded.

2. A method as claimed in claim 1, wherein said steps of applying the thermoplastic material and of subsequently pressing thereof are carried out at such temperatures as to assure so high viscosities of thermoplastic material as to form a substantially stable layer thereof on the resin and so low viscosities of thermoplastic material as to permit a substantially even impregnation by the thermoplastic material in the subsequent compression step.

3. A method as claimed in claim 2, wherein the foamed resin is a polyurethane foam and the thermoplastic material viscosity in the layer application and compression steps is ranging from 400 to 700 cps.

4. A method as claimed in claim 1, wherein the compression step is carried out by calendering after the layer application step in a continous process.

0083321

5. A method as claimed in claim 4, wherein the calandering step is carried out simultaneously on at least two sheets of foamed resin, between which a layer of thermoplastic material is sandwiched.

6. A method as claimed in claim 5, wherein the thicknesses of the resin sheets and the thermoplastic material layer and the calander roller nip are calculated so as to carry out the impregnation of each of the resin sheets to a de-pth lower than the thickness thereof; wherein the partially impregnated sheets are overturned by 180° and wherein the steps of applying thermoplastic material sheets coupling and calendering are repeated in order to complete the sheet impregnation on their opposite surfaces.

7. A method as claimed in claim 6, wherein an even number of resin sheets are simultaneously calendered with the thermoplastic material layer sandwiched between the innermost sheets so that all the sheets are fully impregnated with the exception of the pair of the outermost sheet which are partially impregnated.

8. An equipment for impregnating an elastically compressible foamed resin with thermoplastic materials having a substantially higher melting point than the resin degradation temperature, particularly for carrying out the method according the claim 1, said equipment comprising a hopper for containing and delivering at controlled temperature and flow rate the thermoplastic material, means for feeding at least one foamed resin sheet-like element at the delivering area of the thermoplastic material and means for simultaneously pressing the resin and the thermoplastic material, as well as for allowing their subsequent release.

9. An equipment as claimed in claim 8, wherein said pressing means are formed of calender rollers, the nip of which is adjustable.

10. An equipment as claimed in claim 8, wherein upstream the contact region between the calender rollers one or more toothed rollers are provided, which cooperate with each of the calender rollers to press and elastically release the foamed resin.

11. An equipment as claimed in claim 8, further comprising means for feeding at least two foamed resin sheet-like elements to the calender rollers, the delivery of the thermoplastic material being carried out on one or both the foamed resin sheet surfaces, intended to come in mutual contact in the calender.

12. An equipment as claimed in claim 11, further comprising means for overturning by 180° said foamed resin sheet-like elements between the impregnation step of one of their surfaces and a subsequent impregnation step of the opposite surfaces thereof.

13. An equipment as claimed in claim 11, further comprising means for feeding two or more pairs of foamed resin sheet like elements to the calender rollers, means for delivering said thermoplastic material on one or both the inner surfaces of the sheets forming the innermost sheet pair, means for collecting the sheets forming the inner pair(s) as fully impregnated products and means for collecting the sheets forming the outermost sheet pair as partially impregnated products.

14. Industrial product, formed of a sealing element for sound, thermal and hydraulic insulation, which can be compressed as installed according to different ratios, comprising a polyurethane foam obtained by reacting polyols and polyisocyanates, impregnated with a thermoplastic material, such as a bituminous material having a penetration value ranging from 40/60 to 180/200, said foam having a remaining portion of closed cells.

FIG.1

10  12  16  S  H  14  S

FIG.2

10'  14'  24'  20'  18  S  S
10'  10  24  20  18  14

24'  18'  20  16'
22  18'  16
20'  24  18  18

FIG.4

10b  20b  18b
10a  10b  16a
12  24b  16a  24b
10a  10b  18b
10b  20b

24b  18  16b
22  16b
20b  18

FIG 3

FIG.5